# EUROPÄISCHE PATENTSCHRIFT

(11) **EP 1 622 974 B1**
(45) Veröffentlichungstag und Bekanntmachung des Hinweises auf die Patenterteilung: **26.07.2006**
(21) Anmeldenummer: 04729360.0
(22) Anmeldetag: 24.04.2004
(51) Int. Cl.: C08L 59/00

(54) **POLYOXYMETHYLENFORMMASSEN**
POLYOXYMETHYLENE MOLDING COMPOUNDS
MATIERES A MOULER A BASE DE POLYOXYMETHYLENE

(30) Priorität: 30.04.2003 DE 10319740
(43) Veröffentlichungstag der Anmeldung: 08.02.2006
(73) Patentinhaber: BASF Aktiengesellschaft, 67056 Ludwigshafen (DE)
(72) Erfinder: SAUERER, Wolfgang, 67134 Birkenheide (DE); HEINEMANN, Johannes, 68169 Mannheim (DE)
(86) Internationale Anmeldenummer: PCT/EP2004/004353
(87) Internationale Veröffentlichungsnummer: WO 2004/096910

(56) Entgegenhaltungen:
- EP-A- 0 292 746
- US-A- 5 416 152
- US-A- 6 046 141

## Beschreibung

Die Erfindung betrifft thermoplastische Formmassen, enthaltend
A) 15 bis 99,94 Gew.-% eines Polyoxymethylenhomo oder -copolymerisates,
B) 0,05 bis 10 Gew.% eines unpolaren Polypropylenwachses,
C) 0,01 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen,
D) 0 bis 80 Gew.-% sonstiger Zusatzstoffe,
wobei die Summe der Gewichtsprozente der Komponenten A) bis D) stets 100% ergibt.

Weiterhin betrifft die Erfindung die Verwendung derartiger Formmassen zur Herstellung von Formkörpern jeglicher Art und die hierbei erhältlichen Formkörper.

Polyoxymethylen-homo und/oder -copolymerisate sind seit langem bekannt. Die Polymerisate zeichnen sich durch eine Anzahl ausgezeichneter Eigenschaften aus, so dass sie für die verschiedensten technischen Anwendungen geeignet sind.

Eine wesentliche Anforderung ist ein gutes Verarbeitungsverhalten, bei welchem oft in der jeweiligen Kombination von Additiven die eingesetzten Schmiermittel eine wesentliche Rolle spielen. Beispielsweise ist aus den EP-A 548 692, EP-A 905 190, US 6046141 oder CA-A 2 331 052 der Zusatz von (oxidierten) Polyethylenwachsen bekannt. (Fett)Säuren oder deren Salze bzw. deren Ester sind beispielsweise aus der DE-A 422 90 88 und DE-A 100 29 533 als Schmiermittel bekannt. Nachteilig bei den aus dem Stand der Technik bekannten Schmiermitteln sind Formbelag und insbesondere eine Verschlechterung der mechanischen Eigenschaften (insbesondere Zähigkeit).

Aus der DE-A 33 44 313 sind aminsubstituierte Triazinverbindungen in Kombination mit reaktiven polyfunktionellen Cyansäureestern zur Verbesserung der mechanischen Eigenschaften bekannt.

Der vorliegenden Erfindung lag daher die Aufgabe zugrunde, Polyoxymethylen-Formmassen zur Verfügung zu stellen, welche eine möglichst geringe Zykluszeit mit gutem Entformungsverhalten, geringem Formbelag unter Erhalt bzw. Verbesserung der mechanischen Eigenschaften, insbesondere der Schlagzähigkeit aufweisen. Zusätzlich sollte der Restformaldehydgehalt reduziert werden.

Demgemäss wurden die eingangs definierten Formmassen gefunden. Bevorzugte Ausführungsformen sind den Unteransprüchen zu entnehmen.

Überraschenderweise führt der Einsatz eines spröderen PP-Wachses (im Vergleich zu PE-Wachsen) zu besseren Verarbeitungseigenschaften und einem reduzierten Restformaldehydgehalt.

Als Komponente A) enthalten die erfindungsgemäßen Formmassen 15 bis 99, 94 Gew.-%, vorzugsweise 30 bis 98 Gew.-% und insbesondere 40 bis 90 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol.-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A) bevorzugt, insbesondere solche, die neben den wiederkehrenden Einheiten -CH₂O-noch bis zu 50, vorzugsweise 0,1 bis 20, insbesondere 0,3 bis 10 mol.-% und ganz besonders bevorzugt 2 bis 6 mol.-% an wiederkehrenden Einheiten 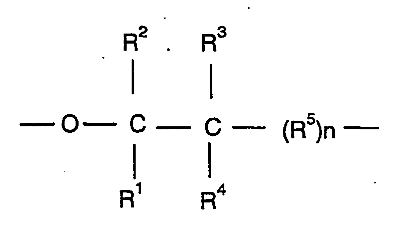 wobei R¹ bis R⁴ unabhängig voneinander ein Wasserstoffatom, eine C₁ - bis C₄₋Alkylgruppe oder eine halogensubstituierte Alkylgruppe mit 1 bis 4 C-Atomen und R⁵ eine -CH₂-, CH₂O-, eine C₁ - bis C₄ -Alkyl- oder C₁ - bis C₄ -Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugt cyclische Ether sind solche der Formel 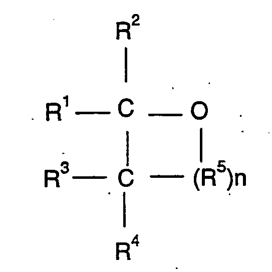 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 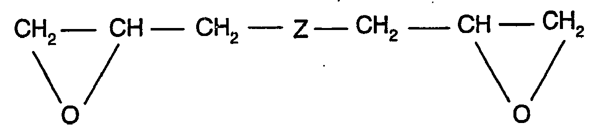 und/oder 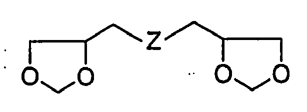 wobei Z eine chemische Bindung, -O-, -ORO- (R= C₁-bis C₈-Alkylen oder C₃-bis C₈₋Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so dass sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 300000, vorzugsweise von 7000 bis 250000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen in Mengen von 0,05 bis 10, bevorzugt von 0,1 bis 5 Gew.-% eines unpolaren Polypropylenwachses. Unter Polypropylenwachsen versteht man im allgemeinen Polypropylene mit wachsartigem Charakter, welche entsprechend ein niedriges Molekulargewicht aufweisen.

Die erfindungsgemäßen Wachse B) weisen ein mittleres Molekulargewicht (Gewichtsmittel) M_{w} von 2000 bis 60000 (mittels GPC und Standard Polystyrol), vorzugsweise von 5000 bis 50000 und insbesondere von 10000 bis 45000 auf.

Der Erweichungspunkt der erfindungsgemäßen Wachse B) beträgt vorzugsweise mindestens 140°C, vorzugsweise mindestens 150°C, ermittelt gemäß DIN EN 1427 (Ring und Kugel Methode).

Die Viskosität der erfindungsgemäßen Wachse B) beträgt im allgemeinen von 10 bis 5000 mPas, vorzugsweise von 100 bis 3000 mPas bei 170°C gemäß DIN 53018.

Die Dichte der erfindungsgemäßen Wachse B) beträgt üblicherweise von 0,87 bis 0,92 g/cm³, bevorzugt von 0,88 bis 0,91 g/cm³ gemäß DIN 53479.

Bevorzugte PP-Wachse B) haben die Form sog. Mikropulver, deren d₅₀-Wert von 1 bis 50 µm, vorzugsweise von 5 bis 30 µm beträgt.

Unter unpolaren PP-Wachsen im Sinne der Erfindung versteht man gemäß Ullmann's Encyclopedia of Industrial Chemistry, 6. Auflage Stichwort 6.1.5 Polar Polyolefin waxes, Verlag Chemie, 2000) Wachse ohne den Einbau polarer Gruppen (insbesondere von Carboxyl- und/oder Estergruppen).

Die Herstellung der erfindungsgemäßen PP-Wachse B) kann in gerührten Hochdruckautoklaven oder in Hochdruckrohrreaktoren unter Einsatz von Reglern erfolgen. Die Herstellung in gerührten Hochdruckautoklaven ist bevorzugt. Die für das erfindungsgemäße Verfahren angewandten gerührten Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5 : 1 bis 30 : 1, bevorzugt 10 : 1 bis 20 : 1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996.

Als weitere Herstellmethode ist gemäß Ullmann (s.o.) die Depolymerisation von Polypropylenen mit höheren Molmassen üblich.

Die im Handel erhältlichen PP-Wachse B) sind transluzente, farblose bis weiße Pulverprodukte, welche klare Schmelzen ergeben und in unpolaren Lösungsmitteln löslich sind.

Bevorzugte Produkte sind Licowax® PP insbesondere Licowax PP 230 sowie PP 220 und Licowax VP PP-Typen (der Firma Clariant GmbH) und Ceridust® VP 6071 sowie die LC 525 N, LC 502 N, LC 502 NC, LC 503 N, LC 503 NC-Typen der Firma Hana Corporation, Korea.

Als Komponente C) enthalten die erfindungsgemäßen Formmassen von 0,01 bis 5, vorzugsweise von 0,09 bis 2 und insbesondere von 0,1 bis 0,7 Gew.-% mindestens eines Esters oder Amids gesättigter oder ungesättigter aliphatischer Carbonsäuren mit 10 bis 40 C-Atomen bevorzugt 16 bis 22 C-Atomen oder aliphatischen gesättigten Alkoholen oder Aminen mit 2 bis 40 C-Atomen bevorzugt 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Glycerin und Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmittat, Glycerintrilautrat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente D) können die erfindungsgemäßen Formmassen 0 bis 80 Gew.-%, vorzugsweise 0 bis 50 Gew.-% und insbesondere 0 bis 40 Gew.-% weitere Zusatzstoffe enthalten.

Als sterisch gehinderte Phenole D1) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

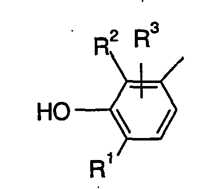

in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (USA 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 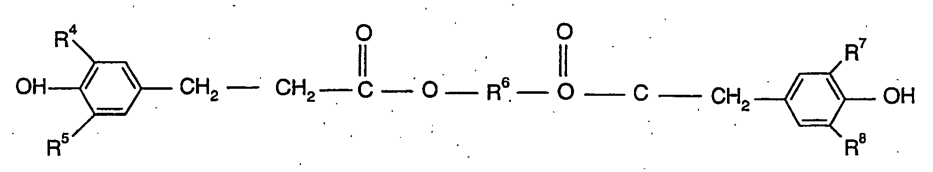 wobei R⁴, R⁵, R⁷ 'und R⁸ unabhängig voneinander C₁-C₈-Alkylgruppen, die ihrerseits substituiert sein können (mindestens eine davon ist eine sterisch anspruchsvolle Gruppe) und R⁶ einen zweiwertigen aliphatischen Rest mit 1 bis 10 C-Atomen, der in der Hauptkette auch C-O-Bindungen aufweisen kann.

Bevorzugte Verbindungen, die dieser Formen entsprechen, sind

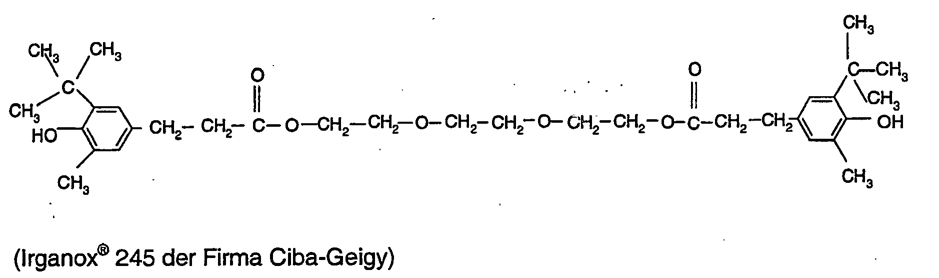

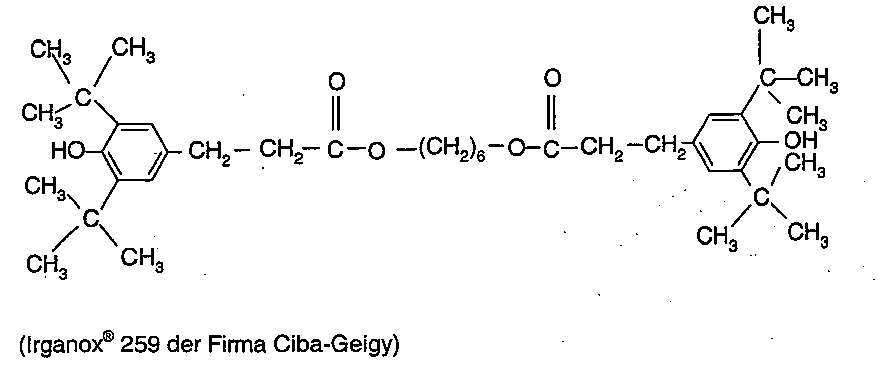

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (D1), die einzeln oder als Gemische eingesetzt werden können, können in einer Menge von 0,005 bis zu 2 Gew.-%, vorzugsweise von 0,1 bis 1,0 Gew.-%, bezogen auf das Gesamtgewicht der Formmassen A) bis D) eingesetzt werden.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten D2) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methan-dodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicydohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt von 0,001 bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämttich geeignet.

Als Komponente D3) können die erfindungsgemäßen Polyoxymethylen-Formmassen 0,002 bis 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer der Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

Me • x SiO₂ • n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen D) werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate und/oder Calcium- und Magnesiumglycerophosphate können beispielsweise durch die folgenden Kenndaten näher spezifiziert werden:

Calcium- bzw.- Magnesiumsilikat:
Gehalt an CaO bzw. MgO: 4 bis 32 Gew.%, vorzugsweise 8 bis 30 Gew.-% und insbesondere 12 bis 25 Gew.-%,
Verhältnis SiO₂ : CaO bzw. SiO₂ : MgO (mol/mol) : 1,4 bis 10, vorzugsweise 1,4 bis 6 und insbesondere 1,5 bis 4,
Schüttgewicht: 10 bis 80 g/100 ml, vorzugsweise 10 bis 40 g/100 ml und durchschnittliche Kenngröße: kleiner als 100 µm,
vorzugsweise kleiner als 50 µm und

Calcium- bzw. Magnesiumglycerophosphate:
Gehalt an CaO bzw. MgO: größer als 70 Gew.%, vorzugsweise größer als 80 Gew.% Glührückstand: 45 bis 65 Gew.-%
Schmelzpunkt: größer als 300°C und
durchschnittliche Korngröße: kleiner als 10 µm, vorzugsweise kleiner, als 50 µm.

Als Komponente D4) können die erfindungsgemäßen Formmassen 0 bis 3, vorzugsweise 0,05 bis 3, insbesondere 0,09 bis 2 und ganz besonders bevorzugt von 0,1 bis 1 Gew.-% mindestens einer Verbindung der allgemeinen Formel 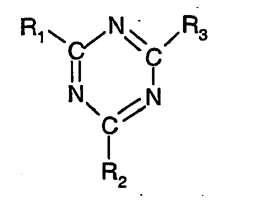 worin R₁, R₂ und R₃ gleich oder unterschiedlich sind und jeweils ein Wasserstoffatom, ein Halogenatom, eine Hydroxylgruppe, eine Alkylgruppe, eine Alkoxygruppe, eine Arylgruppe, eine Arylalkyloxygruppen oder eine substituierte oder unsubstituierte Amingruppe enthalten mit der Maßgabe, dass mindestens einer der Reste R₁, R₂ und R₃ eine substituierte oder unsubstituierte Amingruppe ist.

Als bevorzugte Komponente D4) seien Verbindungen der allgemeinen Formel 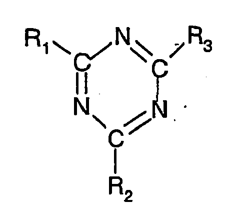 genannt, worin R₁, R₂ und R₃ gleich oder unterschiedlich sind und jeweils Wasserstoffatome, Halogenatome, eine Hydroxylgruppe, eine Alkylgruppe, eine Alkoxygruppe, eine Arylgruppe, eine Arylalkyloxygruppe oder eine substituierte oder unsubstituierte Amingruppe mit der Maßgabe bedeuten, dass mindestens einer der Reste R₁, R₂ und R₃ eine substituierte oder unsubstituierte Amingruppe ist und mindestens 1 Rest R₂, R₁ oder R₃ aus einer aromatischen C₅-C₂₀-Gruppe, welche gegebenenfalls substituiert sein kann, aufgebaut ist.

Das Halogenatom besteht beispielsweise aus Chlor oder Brom, und vorzugsweise aus Chlor.

Beispiele für die Alkylgruppe sind solche mit 1 bis 6 Kohlenstoffatomen, vorzugsweise 1 bis 4 Kohlenstoffatomen.

Beispiele für Alkoxygruppen sind solche mit 1 bis 6 Kohlenstoffatomen, vorzugsweise 1 bis 4 Kohlenstoffatomen.

Die Phenylgruppen, Naphthylgruppen und Fluorenylgruppen werden als Arylgruppe bevorzugt und Phenylalkyloxygruppen, insbesondere Benzyloxy- oder Phenylethyloxygruppen, werden als Arylalkyloxygruppen bevorzugt.

Beispiele für Substituenten an der substituierten Aminogruppe umfassen niedere Alkylgruppen mit 1 bis 6 Kohlenstoffatomen, wie Methyl-, Äthyl-, Butyl- oder Hexylgruppen, Phenylgruppen, niedere Alkenylgruppen mit 3 bis 6 Kohlenstoffatomen, wie Allyl- oder Hexenylgruppen, Hydroxyalkylgruppen mit 1 oder 2 Kohlenstoffatomen, wie Hydroxymethyl- oder Hydroxyethylgruppen, und Cyanalkylgruppen mit 3 bis 6 Kohlenstoffatomen, wie Cyanethyl- oder Cyanbutylgruppen.

Beispiele für aminsubstituierte und aromatische substituierte Triazine umfassen 2,4-Diamino-6(o,p,m)chlorphenyltriazin, 2-Amino-4-Chlor-6-Phenyltriazin, 2-Amino-4,6-Diphenyltriazin, 2,4-Diamino-6-Naphthyltriazin, 2,4-Diamino-6-Fluorenyltriazin, 2,4-Diamino-6(o,m,p)alkylphenyltriazine, wobei der Methylrest als Substituent bevorzugt ist, 2,4-Diamino-6(o,m,p)methoxyphenyltriazin und 2,4-Diamino-6(o,m,p)carboxylphenyltriazine, N-Phenylmelamin, N,N'-Diphenylmelamin, wobei Benzoguanamin, d.h. 2,4-Diamino-6-phenyl-sym.triazin und 2,4-Diamino-6-benzyloxy-sym.-triazin besonders bevorzugt sind.

Besonders bevorzugte Komponente D4) enthalten mindestens 2 Resten R₁, R₂ oder R₃ die aus (un)substituierten Aminogruppen aufgebaut sind und /oder in denen der aromatische Rest R₁, R₂ oder R₃ aus mindestens einem Phenylring besteht.

Ganz besonders bevorzugt besteht die Komponente D4) aus Benzoguanamin.

Verfahren zur Herstellung sind dem Fachmann bekannt, weshalb sich weitere Einzelheiten hierzu erübrigen.

Als weitere Komponente D5) können die erfindungsgemäßen Formmassen 0,0001 bis 3 Gew.-%, vorzugsweise 0,001 bis 1 Gew.% und insbesondere 0,01 bis 0,3 Gew.-% eines Nukleierungsmittels enthalten.

Als Nukleierungsmittel kommen alle bekannten Verbindungen in Frage, beispielsweise Melamincyanurat, Borverbindungen wie Bomitrid, Kieselsäure, Pigmente wie z.B. Heliogenblau® (Kupferphthalocyaninpigment; eingetragenes Warenzeichen der BASF Aktiengesellschaft).

Bevorzugtes Nukleierungsmittel ist Talkum, welches ein hydratisiertes Magnesiumsilikat der Zusammensetzung Mg₃[(OH)₂/Si₄O₁₀] oder 3 MgO 4 SiO₂ ·H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:
< 20 µm 100 Gew.%
< 10 µm 99 Gew.-%
< 5 µm 85 Gew.%
< 3 µm 60 Gew.%
< 2 µm 43 Gew.%

Derartige Produkte sind im Handel als Micro-Talc I.T. extra (Fa. Norwegian Talc Minerals) erhältlich.

Als Komponente D5) können die erfindungsgemäßen Formmassen 0,01 bis 3 Gew.-%, vorzugsweise 0,1 bis 1,0 Gew.% und insbesondere 0,1 bis 0,6 Gew.% mindestens eines verzweigten oder vernetzten Polyoxymethylencopolymerisates als Nukleierungsmittel enthalten.

Die erfindungsgemäßen verzweigten oder vernetzten Polyoxymethylene können
a) durch Copolymerisation von vorstehend unter A) aufgeführten Monomeren, vorzugsweise Trioxan mit mindestens einer mit diesen, vorzugsweise Trioxan copolymersierbaren, mehrfunktionell reagierenden Verbindung und gegebenenfalls mit mindestens einer mit Trioxan copolymerisierbären, monofunktionell reagierenden Verbindung oder
b) durch nachträglich an einem linearen Polyoxymethylen mit seiten- oder kettenständigen, funktionellen Gruppen durchgeführte Verzweigungs- oder Vemetzungsreaktionen oder
c) durch Copolymerisation von vorstehend unter A) aufgeführten Monomeren, vorzugsweise Trioxan mit mindestens einer mit diesen vorzugsweise Trioxan copolymerisierbaren, monofunktionell reagierenden Verbindung und einem verzweigten oder vernetzten Polyäther bzw. durch Reaktion eines linearen Polyoxymethylens mit einem verzweigten oder vernetzten Polyether
erhalten werden. Derartige Polymerisate sind beispielsweise der DE-A 22 33 143, DE 21 01 817, DE-A 21 66 377 und DE-A 21 50 038 zu entnehmen.

Als Komponente D5) insbesondere geeignet sind Oxymethylenterpolymerisate, die beispielsweise durch Umsetzung von Trioxan, einem der vorstehend unter A) beschriebenen cyclischen Ether mit einem dritten Monomeren, vorzugsweise bifunktionellen Verbindungen der Formel 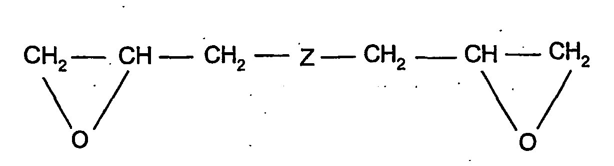 und/oder 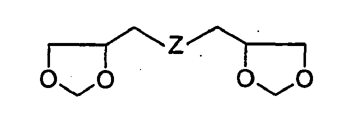 wobei Z eine chemische Bindung, -O-, -ORO- (R= C₁-bis C₈-Alkylen oder C₃-bis C₈₋Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Die erfindungsgemäß verwendeten verzweigten oder vernetzten Polyoxymethylene besitzen Schmelzindices MVR von 0,1 bis 80 cm³/10 Min., vorzugsweise von 0,5 bis 50 cm^{3/}/10 Min. gemäß ISO 11 33 bei einer Temperatur von 190°C und einer Belastung von 2,16 kg. Ganz besonders geeignet sind verzweigte oder vemetzte Polyoxymethylene mit Schmelzindices von 0,8 bis 40 cm³/10 Min.

Als Füllstoffe in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. EthylenPropylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien,5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acryisäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 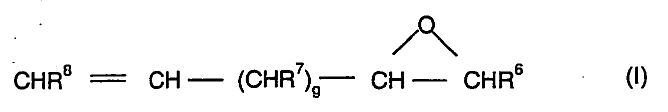 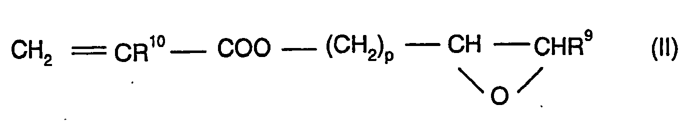 wobei R₆ - R₁₀ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R₆ bis R₈ Wasserstoff, wobei m für 0 oder 1 und g für 1 steht. Die entsprechenden Verbindungen sind Allylglycidylether und Vinylglycidylether.

Bevorzugte Verbindungen der Formel 11 sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.% Ethylen, 0 bis 20 Gew.-% Epoxygruppen enthaltenden Monomeren sowie-der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40: insbesondere 0,3 bis 20 Gew.-% Glycidylacrylat und/oder Glycidylmethacrylat, (Meth)acrylsäure und/oder Maleinsäureanhydrid und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, a-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 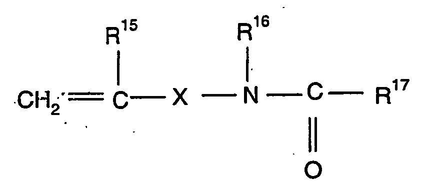 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR18
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C6-C₁₂-Arylengruppe oder 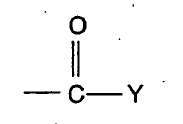
- Y: OZ oder NH-Z und
- Z: eine C₁ bis C₁₀-Alkylen - oder C₆ bis C₁₂-Arylengruppe

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclopentadienylacrylat sowie die in der EP-A 50 265 beschriebenen Verbindungen.

Femer können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomeren; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)-acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Als weitere geeignete Elastomere seien beispielsweise thermoplastische Polyurethane genannt, wie sie beispielsweise in der EP-A 115 846, 115 847 sowie EP-A 117 664 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger) Melaminformaldehydkondensate (MFK), Weichmacher, Haftvermittler und Pigmente genannt. Der Anteil solcher Zusätze liegt im allgemeinen im Bereich von 0,001 bis 5 Gew.-%.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die Komponente B) sowie gegebenenfalls die Komponente(n) C) können in einer bevorzugten Herstellungsform vorzugsweise bei Raumtemperaturen auf das Granulat von A) aufgebracht und anschließend extrudiert werden.

Aus den Formmassen lassen sich Formkörper (auch Halbzeuge, Folien, Filme und Schäume) aller Art herstellen. Die Formmassen zeichnen sich durch einen sehr geringen Restformaldehydgehalt bei gleichzeitig guter Mechanik und Verarbeitung sowie thermischer Stabilität aus. Daher eignen sich Formkörper aus derartigen Formmassen insbesondere für Anwendungen als Drucktasten, Griffmulden, Schiebedachrahmen, Lautsprechergitter, Sanitärarmaturteile, Videokassetten, Spielzeugteile, Fenster und Türenbeschläge, Clipse, Befestigungselemente, Schnappverbindungen, Kugelschalen, Tankeinbauteile, Zahnräder, Führungselemente, Transportbänder, Förderanlagen, Sprühventile, Brüheinheiten für Espressomaschinen, Kaffeeautomaten, Gelenke, Rollen, Lager, Gleitschienen, Pumpenteile und Filtergehäuse, Antriebe, Feder- und Rastelemente, Spulen, Umlenkrollen, Getriebeteile, Pendelstützen.

### Beispiele

Es wurden folgende Komponenten eingesetzt:

### Komponente A/1

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer eine Schmelzvolumenrate von 7 - 8 cm³/10 Min. (190°C 2,16 kg, nach ISO 1133).

### Komponente A/2

POM-Copolymerisat mit MVR 25 - 29 cm³/10 Min. (190°C, 2,16 kg nach ISO 1133).

### Komponente B/1)

Licowax® PP 230 P (PP-Wachs der Fa. Clariant GmbH, Erweichungspunkt 160 bis 166°C nach DIN EN 1427, Viskosität bei 170°C ca. 1700 mPas nach DIN 53018; Mₙ ca. 10000 bis 12000 g/mol, M_{w} ca. 30000 bis 45000 g/mol) gemäß GPC (Standard Polystyrol).

### Komponente B/2) (zum Vergleich)

Licowax® PED 191 (oxidiertes PE-Wachs der Fa. Clariant; Tropfpunkt 120 bis 125°C nach DIN 51801/2, Viskosität bei 140°C ca. 1800 mPas nach DIN 53018).

### Kompoente C)

### Loxiol® P 1206 der Firma Cognis (Glycerindistearat)

### Komponente D1)

### Irganox® 245 der Firma Ciba:

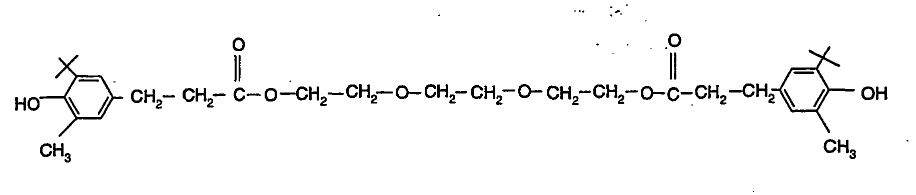

### Komponente D2)

Polyamid-Oligomeres mit einem Molekulargewicht von etwa 3000 g/mol, hergestellt aus Caprolactam, Hexamethylendiamin, Adipinsäure und Propionsäure (als Molekulargewichtsregler) in Anlehnung an die Beispiele 5-4 der US-A 3 960 984 ("PAdicapped").

### Komponente D3)

Synthetisches Mg-Silicat (Ambosol® Firma PQ France) mit folgenden Eigenschaften:
Gehalt an MgO ≥ 14,8 Gew.-%
Gehalt an SiO₂ ≥ 59 Gew.-%
Verhältnis SiO₂:MgO 2,7 mol/mol
Schüttdichte 20 bis 30 g/100 m
Glühverlust < 25 Gew.-%

### Komponente D4)

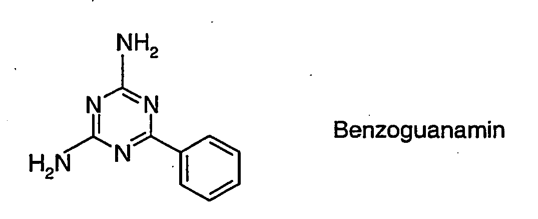

### Komponente D5)

### Talkum (Mikro-Talc 1.T. Extra)

Teilchengröße < 20 µm 100 %
Teilchengröße < 10 µm 99 %
Teilchengröße < 5 µm 85 %
Teilchengröße-< 3 µm 60 %
Teilchengröße < 2 µm 43 %

### bestimmt mittels Sedimentationsanalyse.

### Komponente D6)

Melamin-Formaldehyd-Kondensat (MFK) gemäß Beispiel 1 der DE-A 25 40 207.

Zur Herstellung der Formmassen wurde die Komponente A) mit den in der Tabelle angegebenen Mengen der Komponenten B) bis D) in einem Trockenmischer bei einer Temperatur von 23°C gemischt. Die so erhaltene Mischung wurde in einem Doppelschneckenextruder mit Entgasungsvorrichtung (ZSK 30 bzw. ZSK 53 der Firma Wemer & Pfleiderer) eingebracht, bei 230°C homogenisiert, entgast und das homogenisierte Gemisch durch eine Düse als Strang ausgepresst und granuliert bzw. durch eine Düse in Kugel-/Linsenform unter Wasser granuliert.

Zur Prüfung der Thermostabilität wurden bestimmt:
- GV N₂:: Der Gewichtsverlust in Prozent einer Probe aus 1,2 g Granulat bei 2-stündigem Erhitzen auf 222°C unter Stickstoff.
- GV Luft:: Gewichtsverlust in Prozent einer Probe aus 1,2 g Granulat bei 2-stündigem Erhitzen auf 222°C unter Luft.

Der Restformaldehydgehalt wurde nach der folgenden Nachentgasung bestimmt:

5 kg POM wurden bei 145°C im Schachttrockner mit einem Luft-Durchfluss von 0,6 m/s bei einem Volumenstrom von 12 l/h und einer Wasserdampfmenge von 50 g/kg Luft über 5 Std. im Gegenstrom behandelt.

Die Formaldehydemission wurde gemäß VDA 275 an Standardprobekörpern bestimmt.

Der Formaldehydgehalt im Granulat wurde wie folgt bestimmt

Im 250 ml-Schliff-Erlenmeyer wurden 70 ml VE-Wasser vorgelegt und 50 g der zu untersuchenden Probe hinzugewogen. Danach versah man den Erlenmeyer mit einem sauberen Rückflusskühler, und erhitzte auf vorgeheiztem Magnetrührer unter Rühren schnell zum Sieden. 50 Minuten später wurde rasch abgekühlt und auf dem Metrohm-Titroprozessor 682 unter User Methode 1 und 2 der Formaldehydgehalt bestimmt.

Mit n/10 Natronlauge (5 ml) und n/10 Schwefelsäure wurde genau auf pH 9,4 eingestellt, 5 ml Natriumsulfitlösung hinzugegeben und nach kurzer Reaktionszeit mit n/10 Schwefelsäure auf pH 9,4 zurücktitriert.

Die Berechnung des Restformaldehydgehalts erfolgte durch Masse FA[mg] = Verbrauch [H₂SO₄) x 2 x Konzentration (H₂SO₄) x Masse (Formaldehyd) FA-Gehalt [%] = Masse FA [mg]/Einwaage [g, POM-Granulat] x (1000000/1000)
(Natriumsulfitlösung = 136 g Na₂SO₃ + 1,000 g VE-Wasser)
FA = Formaldehyd

### Charakterisierung der Zykluszeit

Zur Bestimmung der zur Herstellung einwandfreier Formteile im Spritzguss mindestens erforderlichen Zykluszeit ("minimale Zykluszeit") wurden Formteile auf einer Spritzguss-Anlage des Typs Arburg Allrounder 270 S mit einer Schließkraft von 500 kN und einem Schneckendurchmesser von 18 mm hergestellt. Beim Formteil handelt es sich um einen zylindrischen, einseitig mit einem Boden verschlossenen Becher mit einer Höhe von 14 mm, einem Außendurchmesser von 13,6 mm und einer Wanddicke von 1 mm. Spritzgieß-Bedingungen:
- Massetemperatur 200°C
- Werkzeugoberflächentemperatur 90°C
- Schneckenvorlaufgeschwindigkeit 60 mm/s
- Massepolster 5 mm
- Einspritzzeit 0,4 s
- Nachdruckzeit 3 s
- Spritzdruck 700 bar
- Nachdruck 400 bar
- Staudruck 50 bar.

Zur Ermittlung der minimalen Zykluszeit wurde die Kühlzeit ausgehend von 25 s stufenweise um 0,5 s verkürzt. Bei sehr kurzen Kühlzeiten wies der Formteil-Boden nach dem Entformen des Formteils eine konvexe Wölbung auf, so dass die mit dem Boden nach unten auf einem waagrecht stehenden Tisch abgestellten Formteile zur Seite kippten, d.h. ihre Längsachse stand nicht mehr senkrecht zur Tischoberfläche. Die minimale Zykluszeit entspricht der kürzesten Zykluszeit, bei der die Formteile auf der Tischoberfläche abgestellt werden konnten, ohne dass es bei visueller Beobachtung zum Kippen kam, d.h. die Teile waren standfest, ihre Längsachse stand nach dem Abstellen senkrecht auf der Tischoberfläche.

Zur Beurteilung der Zähigkeit wurden die nominelle Bruchdehnung des Zugversuchs nach ISO 527 bei +23°C und die Charpy-Kerbschlagzähigkeit nach ISO 179/1 eA(f) bei +23°C herangezogen sowie Charpy-Schlagzähigkeit (ohne Kerbe) nach ISO 179/1 eU.

Die Zusammensetzungen der Formmassen und die Ergebnisse der Messungen sind denTabellen zu entnehmen.

Angegeben wurden B) bis D) wobei die Menge A/1 oder A/2 jeweils die Differenz zu 100 Gew.-% ergibt.

**Tabelle 1: Beispiele mit Komponente A/1**

| Komponenten | 1V | 2 | 3 | 4 | 5 | 6 | 7 | 8 | 9V | 10V | 11 | 12 | 13V |
|---|---|---|---|---|---|---|---|---|---|---|---|---|---|
| B/1 [Gew.-%] | - | 0,4 | 0,4 | 0,4 | 0,4 | 0,4 | 0,4 | 0,3 | - | | 0,4 | 1 | - |
| B/2 | - | - | - | - | - | - | - | - | - | 0,3 | - | - | - |
| C | - | 0,55 | 0,55 | 0,55 | 0,55 | 0,55 | 0,55. | 0,15 | 0,15 | 0,15 | 0,55 | 0.55 | 0,55 |
| D1 | 0,35 | 0,35 | 0,35 | 0,35 | 0,35 | 0,35 | 0,35 | 0,35 | 0,35 | 0,35 | 0,35 | 0,35 | 0,35 |
| D2 | 0,04 | - | 0,04 | 0,04 | - | 0,04 | 0,04 | 0,04 | 0,04 | 0,04. | 0,04 | 0,04 | 0,04 |
| D3 | 0,05 | 0,05 | 0,05 | 0,05 | 0,05 | 0,05 | 0,05 | 0,05 | 0,05 | 0,05 | 0,05 | 0,05 | 0,05 |
| D4 | - | 0,4 | 0,4 | 0,2 | 0,4 | 0,4 | 0,2 | - | - | - | - | - | - |
| D5 | - | - | - | - | 0,1 | 0,1 | 0,1 | - | - | - | - | - | - |
| D6 | 0,2 | - | - | - | - | - | - | 0,2 | 0,2 | 0,2 | 0,2 | 0,2 | 0,2 |
| GV thermischer Test N₂ [%] | 0,26 | 0,18 | 0,15 | 0,17 | 0,19 | 0,15 | 0,17 | | | | | | |
| GV thermischer Test Luft [%] | 1,13 | - | 1,2 | 0,89 | - | - | - | | | | | | |
| nach Nachentgasung | | | | | | | | | | | | | |
| FA (Sulfitmethode) [ppm] | 40 | 16 | 15 | 17 | 15 | 15 | 15 | | | | | | |
| FA (VDA 275) [ppm] | 8 | 2 | 2 | 2 | 3 | 3 | 3 | | | | | | |
| min. Zykluszeit [s] | | | | | | | | 24,5 | 31 | 26 | 26 | 26 | 27,5 |
| Bruchdehnung [%] | | | | | | | | 27 | 25 | 22 | 30 | 31 | 29 |
| Charpy-Kerbschlagzähigkeit [kJ/m²] | | | | | | | | 6,1 | 5,4 | 5,7 | 5,5 | 5,7 | 5,3 |

**Tabelle 2: Beispiele mit Komponente A/1**

| Komponenten | 1 | 2 | 3 | 4 | 5 |
|---|---|---|---|---|---|
| B/1, [Gew.-%] | 0,4 | 0,4 | 0,4 | 0,4 | 0,4 |
| B/2 | - | - | - | - | - |
| C | 0,55 | 0,55 | 0,55 | 0,55 | 0,55 |
| D1 | 0,35 | 0,35 | 0,35 | 0,35 | 0,35 |
| D2 | 0,04 | 0,04 | 0,04 | 0,04 | 0,04 |
| D3 | 0,05 | 0,05 | 0,05 | 0,05 | 0,05 |
| D4 | 0,4 | 0,4 | 0,4 | 0,4 | 0,4 |
| D5 | 0,075 | 0,1 | 0,125 | 0,15 | 0,2 |
| D6 | - | - | - | - | - |
| GV thermischer Test N₂ [%] | 0,22 | - | 0,19 | 0,20 | 0,18 |
| GV thermischer Test Luft [%] | | - | - | - | - |
| nach Nachentgasung | | | | | |
| FA (Sulfitmethode) [ppm] | 14 | 14 | 14 | 13 | 15 |
| FA (VDA 275) [ppm] | 2 | 2 | 2 | 4 | 2 |
| min. Zykluszeit [s] | - | 26 | - | - | 25,5 |
| Bruchdehnung [%] | - | - | - | - | - |
| Charpy-Kerbschlagzähigkeit [kJ/m²] | - | - | - | - | - |
| Charpy Schlagzähigkeit [kJ/m²] | - | 254 | - | 273 | 260 |

**Tabelle 3: Beispiele mit Komponente A/2**

| Komponenten | 1 | 2 | 3 | 4 | 5 | 1V |
|---|---|---|---|---|---|---|
| B/1[Gew.-%] | 0,4 | 0,4 | 0,4 | 0,4 | 0,4 | - |
| B/2 | - | - | - | - | - | - |
| C | 0,6 | 0,6 | 0,6 | 0,6 | 0,6 | 0,3 |
| D1 | 0,2 | 0,2 | 0,2 | 0,2 | 0,2 | 0,2 |
| D2 | 0,04 | 0,04 | 0,04 | 0,04 | 0,04 | 0,04 |
| D3 | 0,05 | 0,05 | 0,05 | 0,05 | 0,05 | 0,05 |
| D4 | 0,4 | 0,4 | 0,4 | 0,4 | 0,4 | - |
| D5 | 0,075 | 0,1 | 0,125 | 0,15 | 0,2 | - |
| D6 | - | - | - | - | - | 0,2 |
| GV thermischer Test N₂ [%] | - | - | 0,18 | 0,13 | 0,23 | 0,21 |
| GV thermischer Test Luft [%] | - | - | - | - | 1,12 | 1,18 |
| nach Nachentgasung | | | | | | |
| FA (Sulfitmethode) [ppm] .. | 19 | 17 | - | - | 19 | 30 |
| FA (VDA 275) [ppm] | 2 | 1 | 1 | 2 | 2 | 5 |
| min. Zykluszeit [s] | - | 26,5 | - | - | 26,0 | 29,5 |
| Bruchdehnung[%] | - | - | - | - | - | - |
| Charpy-Kerbschlagzähigkeit [kJ/m²] | - | - | - | - | - | - |

## Patentansprüche

1. Thermoplastische Formmassen, enthaltend
A) 15 bis 99,94 Gew.-% eines Polyoxymethylenhomo oder -copolymerisates
B) 0,05 bis 10 Gew.-% eines unpolaren Polypropylenwachses,
C) 0,01 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen,
D) 0 bis 80 Gew.-% sonstiger Zusatzstoffe,
wobei die Summe der Gewichtsprozente der Komponenten A) bis D) stets 100% ergibt.

2. Thermoplastische Formmassen nach Anspruch 1, wobei Komponente B einen Erweichungspunkt gemäß DIN EN 1427 (Ring und Kugel Methode) von mindestens 140°C aufweist.

3. Thermoplastische Formmassen nach den Ansprüchen 1 oder 2, wobei die Komponente B) eine Viskosität [mPas] gemäß DIN 53018 bei 170°C von 10 bis 5000 mPas aufweist.

4. Thermoplastische Formmassen nach den Ansprüchen 1 bis 3, in denen die Komponente B) ein mittleres Molekulargewicht (Gewichtsmittel) M_{w} von 2000 bis 60000 aufweist (gemäß G PC mit Standard Polystyrol).

5. Thermoplastische Formmassen nach den Ansprüchen 1 bis 4, enthaltend
D1) 0,005 bis 2 Gew.-% eines sterisch gehinderten Phenols oder
D2) 0,001 bis 2 Gew.-% eines Polyamids oder
D3) 0,002 bis 2 Gew.-% eines Erdalkalisilikates oder eines Erdalkaliglycerophosphates
oder deren Mischungen.

6. Thermoplastische Formmassen nach den Ansprüchen 1 bis 5, enthaltend
D4) 0,05 bis 3 Gew.-% mindestens einer-Verbindung der allgemeinen Formel 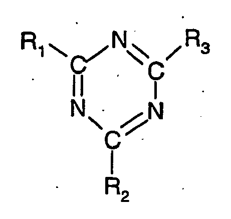
worin R₁, R₂ und R₃ gleich oder unterschiedlich sind und jeweils Wasserstoffatome, Halogenatome, eine Hydroxylgruppe, eine Alkylgruppe, eine Alkoxygruppe, eine Arylgruppe, eine Arylalkylenoxygruppe mit der Maßgabe bedeuten, dass mindestens einer der Reste R₁, R₂ und R₃ eine substituierte oder unsubstituierte Amingruppe ist.

7. Thermoplastische Formmassen nach den Ansprüchen 1 bis 6, enthaltend
D5) 0,01 bis 3 Gew.-% eines Nukleierungsmittels ausgewählt aus der Gruppe der verzweigten Polyoxymethylene oder Talkum oder deren Mischungen.

8. Thermoplastische Formassen nach den Ansprüchen 1 bis 7, in denen die Komponente D4) aus einer Verbindung der allgemeinen Formel 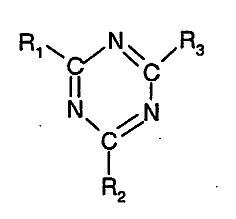 besteht, worin R₁, R₂ und R₃ gleich oder unterschiedlich sind und jeweils Wasserstoffatome, Halogenatome, eine Hydroxylgruppe, eine Alkylgruppe, eine Alkoxygruppe, eine Arylgruppe, eine Arylalkyloxygruppe oder eine substituierte oder unsubstituierte Amingruppe mit der Maßgabe bedeuten, dass mindestens einer der Reste R₁, R₂ und R₃ eine substituierte oder unsubstituierte Amingruppe ist und mindestens 1 Rest R₁, R₂, oder R₃ aus einer aromatischen C₅-C₂₀₋Gruppe, welche gegebenenfalls substituiert sein kann, aufgebaut ist.

9. Verwendung der thermoplastischen Formmassen gemäß den Ansprüchen 1 bis 8 zur Herstellung von Fasern, Folien und Formkörpern.

10. Formkörper, hergestellt aus den thermoplastischen Formmassen gemäß den Ansprüchen 1 bis 8.

## Claims

1. A thermoplastic molding composition comprising
A) from 15 to 99.94% by weight of a polyoxymethylene homo- or copolymer
B) from 0.05 to 10% by weight of a nonpolar polypropylene wax,
C) from 0.01 to 5% by weight of at least one ester or amide of saturated or unsaturated aliphatic carboxylic acids having from 10 to 40 carbon atoms with saturated aliphatic alcohols or amines having from 2 to 40 carbon atoms,
D) from 0 to 80% by weight of other additives,
where the total of the percentages by weight of components A) to D) is always 100%.

2. The thermoplastic molding composition according to claim 1, where component B has a softening point to DIN EN 1427 (ring and ball method) of at least 140°C.

3. The thermoplastic molding composition according to claim 1 or 2, where component B) has a viscosity [mPas] to DIN 53018 of from 10 to 5000 mPas at 170°C.

4. The thermoplastic molding composition according to any of claims 1 to 3, in which component B) has an average molecular weight (weight-average) M_{w} of from 2000 to 60 000 (according to GPC using polystyrene standard).

5. The thermoplastic molding composition according to any of claims 1 to 4, comprising
D1) from 0.005 to 2% by weight of a sterically hindered phenol, or
D2) from 0.001 to 2% by weight of a polyamide, or
D3) from 0.002 to 2% by weight of an alkaline earth metal silicate or of an alkaline earth metal glycerophosphate,
or a mixture of these.

6. The thermoplastic molding composition according to any of claims 1 to 5, comprising
D4) from 0.05 to 3% by weight of at least one compound of the formula 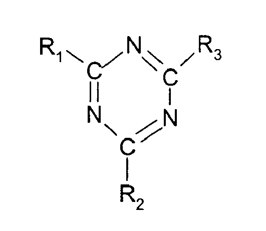
where R₁, R₂ and R₃ are identical or different and are, respectively, hydrogen atoms, halogen atoms, a hydroxy group, an alkyl group, an alkoxy group, an aryl group, an arylalkyleneoxy group, with the proviso that at least one of the radicals R₁, R₂ and R₃ is a substituted or unsubstituted amine group.

7. The thermoplastic molding composition according to any of claims 1 to 6, comprising
D5) from 0.01 to 3% by weight of a nucleating agent selected from the group of the branched polyoxymethylenes, or talc, or a mixture of these.

8. The thermoplastic molding composition according to any of claims 1 to 7, in which component D4) is composed of a compound of the formula 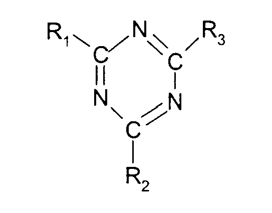 where R₁, R₂ and R₃ are identical or different and are, respectively, hydrogen atoms, halogen atoms, a hydroxy group, an alkyl group, an alkoxy group, an aryl group, an arylalkyloxy group, or a substituted or unsubstituted amine group, with the proviso that at least one of the radicals R₁, R₂ and R₃ is a substituted or unsubstituted amine group, and at least 1 radical R₁, R₂, or R₃ derives from an aromatic C₅-C₂₀ group, which may optionally be substituted.

9. The use of the thermoplastic molding composition according to any of claims 1 to 8 for producing fibers, films, or moldings.

10. A molding, produced from the thermoplastic molding composition according to any of claims 1 to 8.

## Revendications

1. Masses de moulage thermoplastiques contenant
A) 15 à 99,94 % en poids d'un homopolymère ou copolymère de polyoxyméthylène,
B) 0,05 à 10 % en poids d'une cire de polypropylène non polaire,
C) 0,01 à 5 % en poids d'au moins un ester ou amide d'acides carboxyliques aliphatiques saturés ou insaturés comportant 10 à 40 atomes de C avec des alcools ou amines aliphatiques saturés comportant 2 à 40 atomes de C,
D) 0 à 80 % en poids d'autres additifs,
la somme des pourcents en poids des composants A) à D) donnant toujours 100 %.

2. Masses de moulage thermoplastiques suivant la revendication 1, dans lesquelles le composant B présente un point de ramollissement selon la norme DIN EN 1427 (méthode à la bille et à l'anneau) d'au moins 140°C.

3. Masses de moulage thermoplastiques suivant les revendications 1 ou 2, dans lesquelles le composant B) présente une viscosité [mPas] selon la norme DIN 53018 à 170°C de 10 à 5000 mPas.

4. Masses de moulage thermoplastiques suivant les revendications 1 à 3, dans lesquelles le composant B) présente un poids moléculaire moyen (moyenne pondérale) M_{w} de 2000 à 60.000 (selon une GPC avec polystyrène standard).

5. Masses de moulage thermoplastiques suivant les revendications 1 à 4, contenant
D1) 0,005 à 2 % en poids d'un phénol à empêchement stérique, ou
D2) 0,001 à 2 % en poids d'un polyamide, ou
D3) 0,002 à 2 % en poids d'un silicate de métal alcalino-terreux ou d'un glycérophosphate de métal alcalino-terreux,
ou leurs mélanges.

6. Masses de moulage thermoplastiques suivant les revendications 1 à 5, contenant
D4) 0,05 à 3 % en poids d'au moins un composé de la formule générale 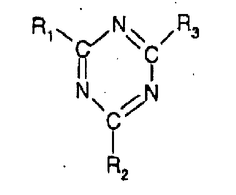 dans laquelle R₁, R₂ et R₃ sont identiques ou différents et représentent chacun un atome d'hydrogène, un atome d'halogène, un groupe hydroxyle, un groupe alkyle, un groupe alcoxy, un groupe aryle, un groupe arylalkylénoxy à la condition qu' au moins un des radicaux R₁, R₂ et R₃ soit un groupe amine substitué ou non substitué.

7. Masses de moulage thermoplastiques suivant les revendications 1 à 6, contenant
D5) 0,01 à 3 % en poids d'un agent de nucléation choisi parmi le groupe des polyoxyméthylènes ramifiés ou du talc ou de leurs mélanges.

8. Masses de moulage thermoplastiques suivant les revendications 1 à 7, dans lesquelles le composant D4) est constitué d'un composé de la formule générale 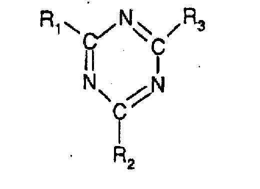 dans laquelle R₁, R₂ et R₃ sont identiques ou différents et représentent chacun un atome d'hydrogène, un atome d'halogène, un groupe hydroxyle, un groupe alkyle, un groupe alcoxy, un groupe aryle, un groupe arylalkyloxy ou un groupe amine substitué ou non substitué à la condition qu' au moins un des radicaux R₁, R₂ et R₃ soit un groupe amine substitué ou non substitué et qu'au moins un radical R₁, R₂ ou R₃ soit édifié à partir d'un groupe aromatique en C₅-C₂₀ qui peut éventuellement être substitué.

9. Utilisation des masses de moulage thermoplastiques suivant les revendications 1 à 8, pour la préparation de fibres, de feuilles et de corps façonnés.

10. Corps façonnés préparés à partir des masses de moulage thermoplastiques suivant les revendications 1 à 8.
